# EUROPEAN PATENT SPECIFICATION

(11) **EP 3 701 668 B1**
(45) Date of publication and mention of the grant of the patent: **21.09.2022**
(21) Application number: 18786827.8
(22) Date of filing: 23.10.2018
(51) Int. Cl.: G06F 21/62

(54) **METHODS FOR RECORDING AND SHARING A DIGITAL IDENTITY OF A USER USING DISTRIBUTED LEDGERS**
VERFAHREN ZUR AUFZEICHNUNG UND ZUM TEILEN EINER DIGITALEN IDENTITÄT EINES BENUTZERS MIT DISTRIBUTED LEDGERS
PROCÉDÉS PERMETTANT D'ENREGISTRER ET DE PARTAGER UNE IDENTITÉ NUMÉRIQUE D'UN UTILISATEUR AU MOYEN DE REGISTRES RÉPARTIS

(30) Priority: 26.10.2017 EP 17306480
(43) Date of publication of application: 02.09.2020
(73) Proprietor: Thales Dis France SAS, 92190 Meudon (FR)
(72) Inventor: CASTILLO, Laurent, 92190 Meudon (FR); WANG, Yesong, 92190 Meudon (FR); AUNG, Khaing Phyo, 92190 Meudon (FR); LAO, Vincent, 92190 Meudon (FR)
(74) Representative: Bricks, Amélie
(86) International application number: PCT/EP2018/079064
(87) International publication number: WO 2019/081530

(56) References cited:
- US-A1- 2015 095 352
- US-A1- 2016 306 982
- US-A1- 2017 222 814
- Gene Vayngrib: "KYC ? tradle/about Wiki ? GitHub", , 2 March 2015 (2015-03-02), XP055311970, Retrieved from the Internet: URL:https://github.com/tradle/about/wiki/K YC [retrieved on 2016-10-18]

## Description

### FIELD OF THE INVENTION

The present invention relates to the field of digital identity recording and sharing, and more particularly to methods for recording and sharing a digital identity of a user using distributed ledgers.

### BACKGROUND OF THE INVENTION

Many organizations are required to verify the identity of a user or customer before letting him access data or benefit from a service, such as banks required to verify the identity of a customer before opening him a bank account, or airplane companies required to verify the identity of a client before letting him board into a plane. In order to perform such a verification, the user or customer is required to provide documents, such as an identity card or a passport, based on which the organizations may verify that the user or customer is indeed authorized to access the data or service he requires. Such organizations may also be required to prove their knowledge and verification of the identity of any customer or user to a regulator. For example, in the banking sector, before opening a new bank account, banks are required to collect various pieces of information about any new client, to verify that this client is allowed to open an account and to inform the regulator of such information through the Know Your Customer KYC process, in order to minimize the risk of fraud or money laundering.

As a result, each time a customer performs an activity requiring him to prove his identity, such as opening a new bank account into a new bank, the customer is required to provide again the same documents, and a verification authority is required to verify these documents, even if the same documents have already been provided and verified earlier by another verification authority, for example by another bank when creating another bank account for the same customer.

Consequently, various methods have been designed for, after a first verification of the identity of a user, digitally recording this user identity and for sharing with others this verified identity and proofs of its verification.

Some solutions rely on a third-party centralized service provider, which verifies the identity of the user, stores a copy of the documents provided by the user for proving his identity, also stores attestations that these documents have been verified and are indeed a proof of the identity of this user, and which may share this information with any organization using the service. Such solutions require to fully trust this service provider on the verification of the user's data and on the authenticity of the data provided later on to other users of the service. They are also exposed to a risk of failure of this service provider, for example either in case of bankruptcy of hacking of the data stored by the service provider.

Other solutions have been designed in which information is distributed between all the organizations needing some knowledge of a user identity. Some methods provide dedicated protocols for sharing information between organizations. Some others rely on distributed ledgers, such as blockchains, for storing in a distributed way and sharing a verified user identity and attestations of verification of the documents proving this identity. Such solutions benefit from the advantages of the blockchain technology: information recorded in a blockchain is immutable and cannot be altered later on, either voluntarily or as a result of an error, by anyone. In case of failure of a node of the ledger, no information is lost since information is also stored by the other nodes of the ledger.

The existing solutions, even based on blockchains, cannot let anyone access the recorded identity information of users. In order to protect their privacy and avoid identity theft, such data shall be protected and accessed only by authorized organizations. As a result, the existing solutions have the drawback that user authorization is required every time an organization wishes to use the recorded identity information of a user for performing verifications. US 2017/222814 discloses creating a digital identity for a user and publishing it on a distributed ledger. US 2016/306982 discloses providing a cryptographic platform for exchanging information.

As a result, there is a need for a method enabling to record a verified digital identity of a user, and to share to some organizations information enabling them to perform verifications about the identity of the user, without asking the user for authorization and without disclosing the actual identity of the user.

### SUMMARY OF THE INVENTION

For this purpose and according to a first aspect, this invention therefore relates to a method for recording a digital identity of a first user comprising the steps, performed by a computing device of a first verification entity identified by a first verification entity identifier, of :
- a) receiving from the first user at least one first user identity document,
- b) extracting user personal identifiable information data elements from said user identity document,
- c) after verification of the user personal identifiable information data elements, encrypting said verified user personal identifiable information data elements using a public key of the first verification entity, and recording said encrypted user personal identifiable information data elements in a first distributed ledger whose access is authorized to a first set of computing devices only,
- d) generating a user identifier to be sent to said user and recording a hash of said user identifier in a second distributed ledger,
- e) generating for each verified user personal identifiable information data element, after it has been verified by the first verification entity, an attestation including the first verification entity identifier and a hash of said user personal identifiable information data element,
- f) recording each generated attestation in said second distributed ledger,
- g) for each generated attestation, recording in said second distributed ledger a relationship between the generated user identifier and said generated attestation, so as to record that said attestation has been generated for a user personal identifiable information data element characterizing the user identified by said generated identifier, wherein said first and second distributed ledgers are distinct from one another and are configured such that access to the first distributed ledger is more restricted than access to the second distributed ledger in such a way that only said first set of computing devices authorized to access the first distributed ledger can access said user personal identifiable information data elements, wherein all data stored in the second distributed ledger form a graph data model in which each node represents an attestation of a user personal identifiable information data element or a user identifier, and wherein the links between the nodes of the model represent the relationships recorded in the second distributed ledger between user identifiers and said recorded attestations, such that any entity having access to the second distributed ledger is able to perform verifications on the relationship between users whose identities have been recorded in the ledgers without having access to said recorded identities.

It enables to record an immutable digital identity of the user in the first distributed ledger when it can only be accessed by a limited number of entities, while enabling a larger number of entities to access the attestations related to this digital identity, in order to perform some verifications without requiring any user authorization. In this method, entities performing verifications based on the attestations only do not gain knowledge of the identity of the user, which remains protected.

User identity documents may be among passport, national identification card, driver license, employee badge, military identification, student identifier, library card.

User personal identifiable information data elements may be among user name, user phone number, user addresses, driver license number, passport number, user bank account, national identification card information.

The user identifier may be a user's email address.

The method according to the first aspect may be performed by a bank as first verification entity during a Know your customer (KYC) process for a first bank account creation and comprise also providing a first bank account number.

According to a second aspect, this invention therefore relates also to a method for obtaining a verified digital identity of a first user having a user identifier, wherein said digital user identity has been recorded according to the method according to the first aspect by a first verification entity into a first distributed ledger and a second distributed ledger, and comprising the steps, performed by a second computing device of a second verification entity authorized to access the first distributed ledger and the second distributed ledger, of :
- after receiving said user identifier, performing an access to the second distributed ledger for getting user attestations for which a relationship with said user identifier is stored in said second distributed ledger,
- sending to the first verification entity a request for obtaining the user personal identifiable information data elements recorded in the first distributed ledger for the first user,
- after user authorization has been given to the first verification entity, performing an access to the first distributed ledger to obtain user personal identifiable information data elements encrypted with a public key of the second verification entity, said first verification entity having obtained from the first distributed ledger said user personal identifiable information data elements encrypted with its public key, having decrypted said encrypted data elements using its private key, having encrypted said user personal identifiable information data elements using the public key of the second verification entity, and having stored in the first distributed ledger said data elements encrypted with the public key of the second verification entity,
- decrypting said obtained encrypted user personal identifiable information data elements using a private key of the second verification entity,
- verifying said user personal identifiable information data elements against said user attestations using hashes of the user personal identifiable information data elements included in said user attestations.

It enables a trusted entity to obtain a verified digital identity of the user, without requiring him to provide again any identity document and without performing itself any document verification.

The method according to the second aspect may comprise the steps, performed by the computing device of the second verification entity and giving said user authorization to the first verification entity, of :
- transmitting to the user a request of Single sign-on (SSO) authentication,
- receiving from the user a Single sign-on (SSO) authorization token authorizing it to obtain the user personal identifiable information data elements,
- sending said authorization token to the first verification entity in order to obtain the user personal identifiable information data elements stored in the first distributed ledger.

It enables the second verification entity to prove to the first distributed ledger that the user has approved that the second verification entity gains knowledge of his identity.

The method according to the second aspect may comprise further the steps, performed by the second computing device of the second verification entity, of :
- a) receiving from said first user at least one second user identity document,
- b) extracting second user personal identifiable information data elements from said second user identity document,
- c) after verification of the second user personal identifiable information data elements, encrypting said verified second user personal identifiable information data elements using a public key of the second verification entity, and recording said encrypted second user personal identifiable information data elements in the first distributed ledger,
- d) generating for each verified second user personal identifiable information data element, after it has been verified by the second verification entity, an attestation including the second verification entity identifier and a hash of said second user personal identifiable information data element,
- e) recording each generated attestation in said second distributed ledger,
- f) for each generated attestation, recording in said second distributed ledger a relationship between the generated first user identifier and said generated attestation.

It enables the second verification entity to update the recorded user digital identity with new Pll data elements extracted from new documents provided by the user.

According to a third aspect, this invention therefore relates also to a method for sharing a digital identity of a user having a user identifier comprising the steps, performed by a computing device of a first verification entity, of :
- recording said digital user identity according to the method according to the first aspect into a first distributed ledger and a second distributed ledger,
- receiving, from a computing device of a second verification entity authorized to access the first distributed ledger and the second distributed ledger, a request for obtaining the user personal identifiable information data elements of said user recorded in the first distributed ledger,
- obtaining user authorization to share with said second verification entity said user personal identifiable information data elements,
- obtaining said user personal identifiable information data elements encrypted with the public key of the first verification entity,
- decrypting, using a private key of the first verification entity, said user personal identifiable information data elements encrypted with its public key,
- encrypting said user personal identifiable information data elements using the public key of the second verification entity,
- storing in the first distributed ledger said user personal identifiable information data elements encrypted with the public key of the second verification entity, in order to share said user personal identifiable information data elements with the second verification entity.

It enables the first verification entity to share the recorded digital identity of the user with the second verification entity, and only with it. Since the user authorization is required before performing such a sharing, this digital identity remains protected against any unauthorized access.

Obtaining user authorization to share with said second verification entity said user personal identifiable information data elements may comprise: receiving a Single sign-on (SSO) authorization token from the second verification entity authorizing said second verification entity to obtain the user personal identifiable information data elements, said Single sign-on (SSO) authorization token having been transmitted from the user to the second verification entity on request of this last one.

The method according to the second aspect may be performed by a bank as verification entity during a KYC process for a second bank account creation and comprise also providing a second bank account number.

It enables the bank to get a verified identity of the user, and to perform verifications on it, before opening him a bank account.

According to a fourth aspect, this invention therefore relates also to a method for verifying a digital identity of a second user having a second user identifier during a transaction with a first user having a first user identifier, performed, during said transaction, by a computing device of a verification entity authorized to perform accesses to a second distributed ledger wherein said identities of the first and second users have been recorded according to the method according to the first aspect:
- after obtaining said first and second user identifiers, performing an access to the second distributed ledger for getting user attestations for which a relationship with said second user identifier is stored in said second distributed ledger and/or user attestations for which a relationship with said first user identifier is stored in said second distributed ledger,
- verifying relationships between the first and the second users based on said attestations,
- when the verifications are successful, performing said transaction.

The method according to the fourth aspect may be performed by a computing device of a first bank as the verification entity requested by a first user having a first bank account in the first bank, to perform a money transfer with a second user having a second bank account in a second bank, and the step of performing said transaction may comprise: transferring money from the first bank account to the second bank account.

It enables a bank to verify the relationships between one of its customers and another individual implied in a money transfer with this customer. By using the information stored in the second distributed ledger, the bank does not need to have knowledge of the real identity of this other individual. The bank may even perform verifications on transactions between two individuals whose identities are unknown to the bank.

According to a fifth aspect, this invention therefore relates also to a computer program product directly loadable into the memory of at least one computer, comprising software code instructions for performing the steps of the method according to the first aspect when said product is run on the computer.

According to a sixth aspect, this invention therefore relates also to a computing device of a first verification entity identified by a first verification entity identifier and comprising a processor, a cryptoprocessor and a communication interface,:
- said communication interface being configured for receiving from a first user at least one first user identity document,
- said processor being configured for extracting user personal identifiable information data elements from said user identity document,
- after verification of the user personal identifiable information data elements, said cryptoprocessor being configured for encrypting said verified user personal identifiable information data elements using a public key of the first verification entity, and said processor being configured for recording said encrypted user personal identifiable information data elements in a first distributed ledger whose access is authorized to a first set of computing devices only,
- said processor being configured for generating a user identifier (KYC ID) to be sent to said user and recording a hash of said user identifier in a second distributed ledger,
- said processor being configured for generating for each verified user personal identifiable information data element, after it has been verified by the first verification entity, an attestation including the first verification entity identifier and a hash of said user personal identifiable information data element,
- said processor being configured for recording each generated attestation in said second distributed ledger, and for each generated attestation, recording in said second distributed ledger a relationship between the generated user identifier and said generated attestation, so as to record that said attestation has been generated for a user personal identifiable information data element characterizing the user identified by said generated identifier,

wherein said first and second distributed ledgers are distinct from one another and are configured such that access to the first distributed ledger is more restricted than access to the second distributed ledger in such a way that only said first set of computing devices authorized to access the first distributed ledger can access said user personal identifiable information data elements,
and wherein all data stored in the second distributed ledger form a graph data model in which each node represents an attestation of a user personal identifiable information data element or a user identifier, and wherein the links between the nodes of the model represent the relationships recorded in the second distributed ledger between user identifiers and said recorded attestations, such that any entity having access to the second distributed ledger is able to perform verifications on the relationship between users whose identities have been recorded in the ledgers without having access to said recorded identities.

### BRIEF DESCRIPTION OF THE DRAWINGS

The following description and the annexed drawings set forth in detail certain illustrative aspects and are indicative of but a few of the various ways in which the principles of the embodiments may be employed. Other advantages and novel features will become apparent from the following detailed description when considered in conjunction with the drawings and the disclosed embodiments are intended to include all such aspects and their equivalents.
- Figure 1 is a schematic illustration of an infrastructure according to an embodiment of the present invention;
- Figure 2 is a schematic illustration of a graph data model according to an embodiment of the present invention;
- Figures 3a, 3b, 3c is a schematic illustration of methods for recording and sharing a digital identity of a user according to an embodiment of the present invention;
- Figure 4 illustrates schematically a computing device of a first verification entity according to an embodiment of the present invention;
- Figure 5 is a schematic illustration of a method for recording a digital identity according to an embodiment of the present invention;
- Figure 6 is a schematic illustration of the content stored in the first distributed ledger and the second distributed ledger according to an embodiment of the present invention;
- Figure 7 is a schematic illustration of methods for enabling the first verification entity to share the verified digital identity of the first user with a second verification entity authorized to access the first distributed ledger and the second distributed ledger according to an embodiment of the present invention;
- Figure 8 is a schematic illustration of a method for updating a digital identity according to an embodiment of the present invention;
- Figure 9 is a schematic illustration of a method for verifying a digital identity of a second user according to an embodiment of the present invention.

### DETAILED DESCRIPTION OF EMBODIMENTS OF THE INVENTION

In the description detailed below, reference is made to the accompanying drawings that show, by way of illustration, specific embodiments in which the invention may be practiced. These embodiments are described in sufficient detail to enable those skilled in the art to practice the invention. It is to be understood that the various embodiments of the invention, although different, are not necessarily mutually exclusive. The description detailed below is, therefore, not to be taken in a limiting sense, and the scope of the present invention is defined only by the appended claims, appropriately interpreted, along with the full range of equivalents to which the claims are entitled.

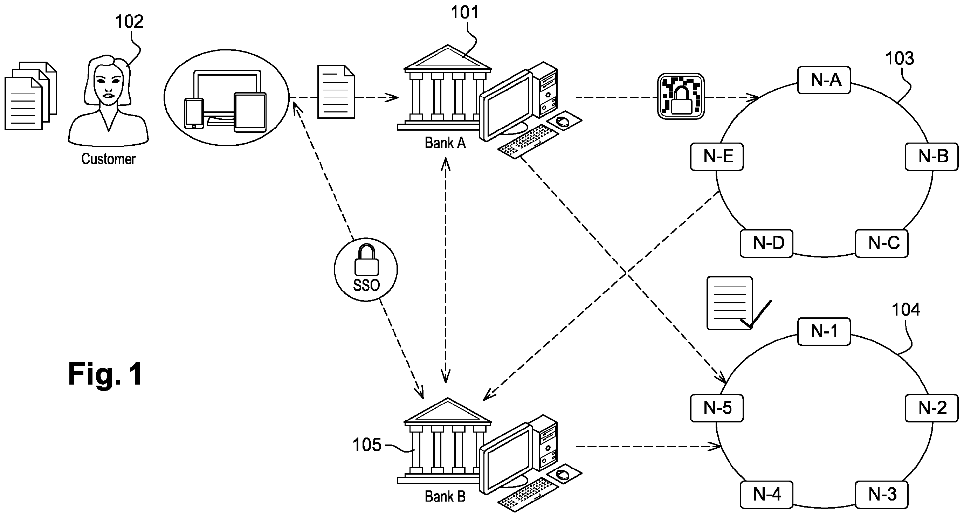

As shown on **Figure** 1, the invention provides an infrastructure based on distributed ledgers and methods enabling a first verification entity 101 to record a digital identity of a user 102 into distributed ledgers 103 and 104, and then to share the recorded digital identity of the user with another entity 105 that needs to get knowledge of a verified identity of the user 102 before providing him a service. In the example of figure 1, the first verification identity 101 is a first bank verifying and recording the identity of the user before opening him a first account, and the other entity 105 is a second bank which needs to know about the identity of the user before opening him a second bank account.

Identity information is provided by the user to the first verification entity by providing identity documents such as passport, national identification card, driver license, employee badge, military identification, student identifier, library card etc. The pieces of information extractible from such documents and characterizing the identity of the user are called user personal identifiable information (Pll) data elements. Such Pll data elements may include user name, user phone number, user addresses, driver license number, passport number, user bank account, national identification card information etc.

Before creating a digital identity for the user, the first verification entity shall verify that the documents provided by the user are authentic and truly identify the user, and not someone else. Such a verification may be performed manually by an employee, for example by checking the document, by verifying a picture of the user on the document against the face of the user in front of him and by performing additional verifications based on digital databases, for example by checking a passport number against a database of known fake identities. In order to record that such a verification was performed, a proof of verification, called attestation, may be generated for each verified user PII data element.

Unlike existing solutions based on distributed ledgers, the invention records separately users PII data elements in a first distributed ledger 103 and attestations for these users PII data elements in a second distributed ledger 104, the first and second distributed ledgers being distinct from one another. By doing so, different access restrictions may be applied to the first and second distributed ledgers: on one hand, access to the first distributed ledger, which stores the actual user PII data elements, is authorized only to a first set of computing devices, which are trusted entities, in order to protect the identity of the user; on the other hand, access to the second distributed ledger, which only stores attestations that do not actually describe the identity of the user, may be granted to a broader set of entities, for example to a second set of computing devices. As a result, access to the first distributed ledger is more restricted than access to the second distributed ledger so that only said first set of computing devices, authorized to access the first distributed ledger, can access the user personal identifiable information data elements stored in the first distributed ledger.

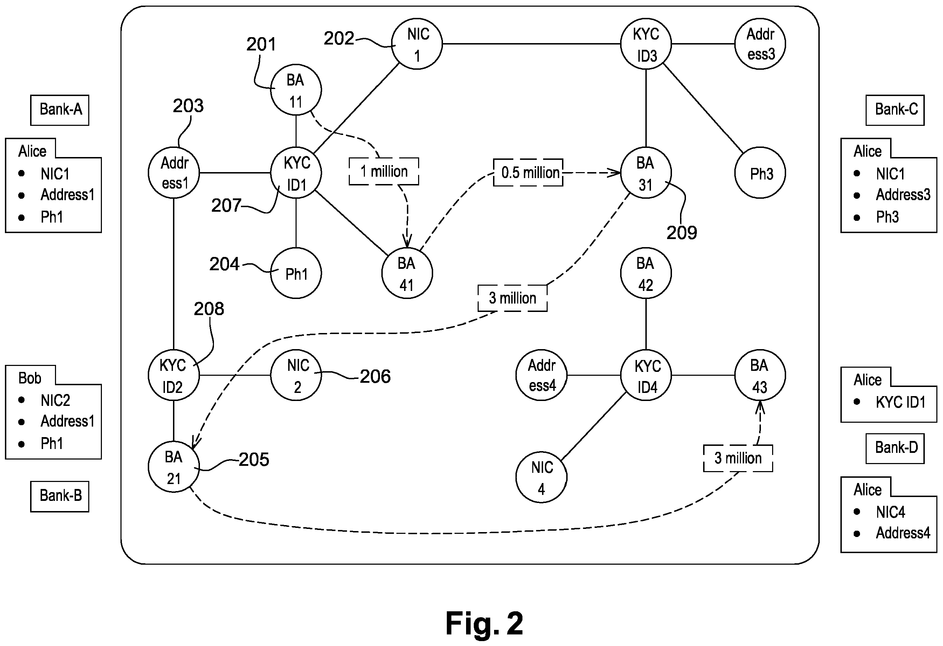

In addition, the attestations stored on the second distributed ledger according to the invention are stored such that verification entities can perform some verifications based on these attestations, without actually having knowledge of the user PII data elements themselves. In order to do so, first, each attestation of a user PII data element includes a hash of this user PII data elements, and secondly additional information is stored in the second distributed ledger along with the attestations such that all data stored in this ledger form a graph data model. An example of such a data model is shown on **Figure 2****.** In such a model, each recorded data, i.e. each attestation of a user PII data element in the case of the second distributed ledger, is a node of the model. As a simplification, one can say in this case that each node represents the user PII data element that is included as a hash in its attestation. For example in Figure 2, node 201 represents a bank account number of a first user, node 202 represents the national identity card (NIC) number of this user, node 203 represents the address of this user and node 204 represents a phone number of this user. Similarly, nodes 205 and 206 represent the NIC number and bank account number of a second registered user. Each user is also identified by a unique identifier, called KYC ID, recorded in the second distributed ledger, represented as a node of the graph data model, such as nodes 207 and 208 corresponding to KYC IDs of the first and second user on Figure 2.

Such a model also records the existing relationships between the nodes of the model, i.e. in the case of the second distributed ledger the links between the KYC ID of the user and the PII data elements of the user. For example on Figure 2, relationships between the first user and his PII data elements are shown as lines linking the first user KYC ID node 207 to user PII data elements nodes 201, 202, 203 and 204.

Using such attestations and such a data model enables any entity having access to the second distributed ledger to perform some verifications on the relationships between users whose identity has been recorded in the ledgers without having access to the actual identity of these users. For example it can be checked if two users involved in a transaction share a same address, or phone number, or driver license number, which may be a sign of fraud, based on the relationships between the nodes of the model and by comparing hash values of PII data elements included in their attestations. It also enables to verify if two different bank accounts belong to the same user identified by his KIC ID. On Figure 2, the graph data model shows that the first and second users share the same address and phone number, and that the bank accounts represented by nodes 201 and 209 in fact belong to the first user.

In addition to the hash of the verified user PII data element, attestations may include an attestation number, an attestation type indicating the type of element recorded as a hash in the attestation (KYC ID, user name, user passport number...), a timestamp, an issue date and an expiration date.

The following paragraphs describe with more details methods according to the invention for recording a digital identity of a user, for sharing a previously verified digital identity of a user, and for verifying a digital identity of a user during a transaction.

### Recording a digital identity

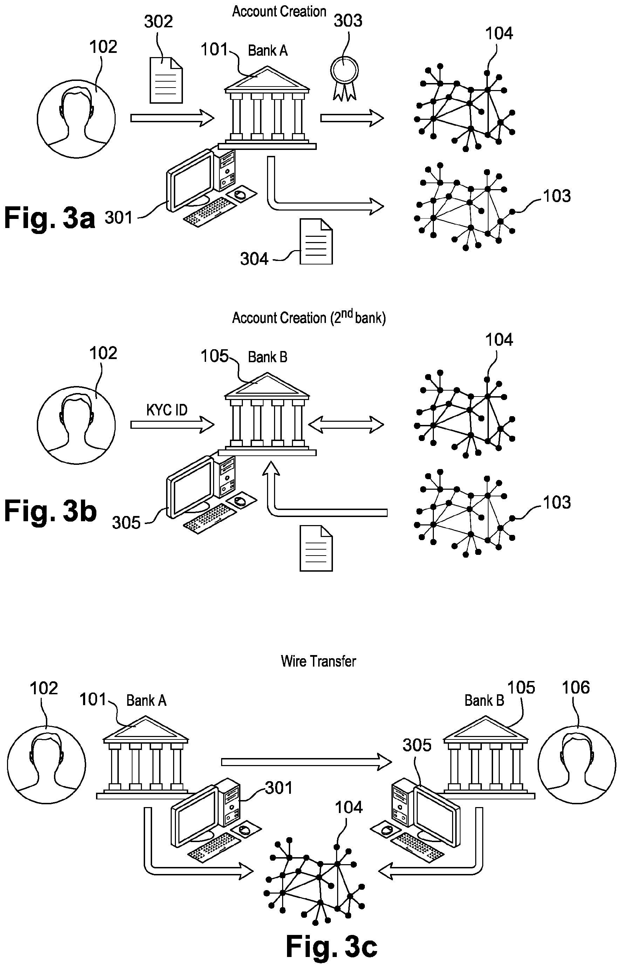

The first method according to the invention is a method for recording a digital identity of a user 102, called first user in the following paragraphs. This first method is performed by a computing device 301 of a first verification entity 101 identified by a first verification entity identifier. As shown on **Figure 3a****,** an example of such a first verification entity may be a bank, in the case of a bank account creation. In this example, the first verification entity is identified by the identifier "Bank-A", and is in charge of collecting from the user 102 at least one identity document 302, of verifying it, of recording the digital identity 304 of the user in the first distributed ledger 103, and of recording attestations 303 for this digital identity in the second distributed ledger 104.

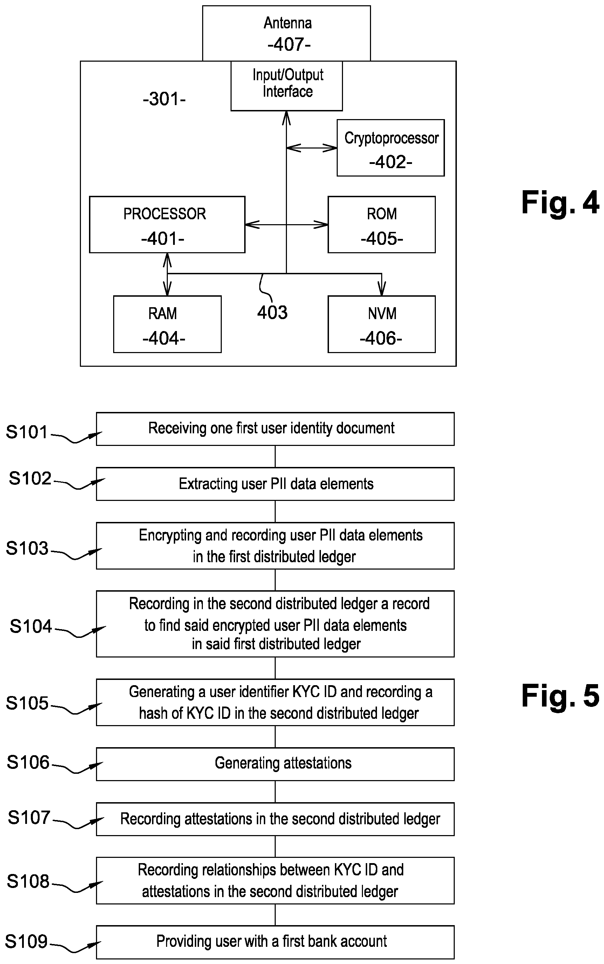

As depicted on **Figure 4****,** the computing device 301 of the first verification entity includes a processor 401 and a cryptoprocessor 402 connected via a bus 403 to a random access memory (RAM) 404, a read-only memory (ROM) 405, and/or a nonvolatile memory (NVM) 406. The computing device 301 further includes a communication interface 407 connected to the bus and by which the client device may be connected to various forms of wireless networks, e.g., wide-area networks, WiFi networks, or mobile telephony networks. Alternatively, the communication interface may connect to networks via wired network connections such as Ethernet. The computing device 301 may also include an input/output user interface providing interfaces to a user of the computing device 301, such as one or more screens, loudspeakers, a mouse, tactile surfaces, a keyboard etc... For example, such a computing device may be a desktop or laptop personal computer, a tablet or a smartphone.

The steps of this method recording a digital identity are shown on **Figure 5****.**

In a first recording step S101, the computing device 301 receives, through its communication interface 407, from the first user at least one first user identity document.

In a second recording step S102, the processor 401 of the computing device 301 extracts user personal identifiable information (Pll) data elements from said user identity document.

The provided identity documents and the extracted user PII data elements are then verified by the first verification entity. For example they may be verified by a bank employee, as described above.

In a third recording step S103, after verification of the user personal identifiable information data elements, the cryptoprocessor 402 of the computing device 301 encrypts said verified user personal identifiable information data elements using a public key of the first verification entity, and records said encrypted user personal identifiable information data elements in the first distributed ledger. By doing so, the digital identity of the first user, verified by the first verification entity, is stored in the first distributed ledger and cannot be modified anymore. Since it is encrypted with the public key of the first verification entity, it can only be decrypted by the first verification entity using its private key, which ensures the protection of this identity against any unauthorized access, and therefore against a risk of identity theft.

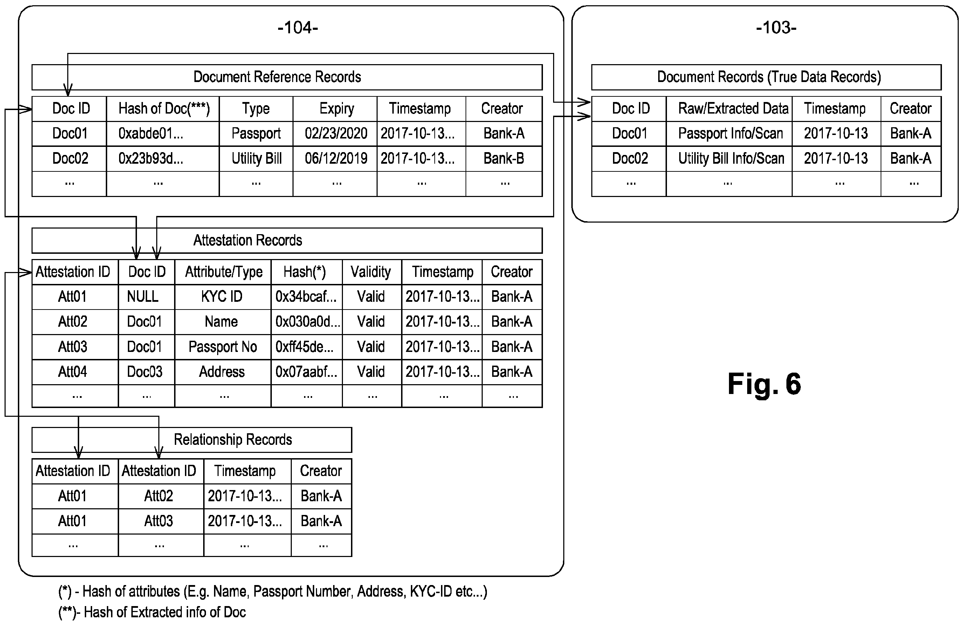

In a fourth recording step S104, the processor 401 of the computing device 301 may store in the second distributed ledger a record that can be used to find the encrypted user personal identifiable information data elements in said first distributed ledger. In a first embodiment, shown on **Figure 6****,** the encrypted user PII data elements are recorded in the first distributed ledger as a document record having a document identifier, for example Doc1. In that case, in the fourth recording step the processor 401 of the computing device 301 records in the second distributed ledger a document reference record including the same document identifier. In a second embodiment, in the fourth recording step the processor 401 of the computing device 301 records in the second distributed ledger the location in the first distributed ledger of the encrypted user PII.

In a fifth recording step S105, the processor 401 of the computing device 301 generates a user identifier KYC ID for the first user. It may for example be a user's email address. This user identifier KYC ID may be sent to the first user, for example digitally by the computing device 301, by email or SMS. It may also be sent to the first user as a letter through postal services in order to avoid any risk of eavesdropping. The processor 401 of the computing device 301 records a hash of said user identifier in the second distributed ledger.

In a sixth recording step S106, the processor 401 of the computing device 301 generates for each verified user personal identifiable information data element, after it has been verified by the first verification entity, an attestation including at least the first verification entity identifier and, a hash of said user personal identifiable information data element. It may also include an additional element enabling to find the corresponding user PII data element in the first distributed ledger. In a first embodiment it is the document identifier of the document record including said user PII data element in the first distributed ledger. In a second embodiment, it is a reference to the record of the location of said encrypted user personal identifiable information data elements in said first distributed ledger. Such attestations may also include additional elements described above such as an attestation number, an attestation type, a timestamp, an issue date and an expiration date.

In a seventh recording step S107, the processor 401 of the computing device 301 records each generated attestation in the second distributed ledger.

In an eighth recording step S108, the processor 401 of the computing device 301 records in the second distributed ledger, for each generated attestation, a relationship between the generated user identifier KYC ID and the generated attestation, so as to record that said attestation has been generated for a user personal identifiable information data element characterizing the user identified by said generated identifier. By doing so, it records the link existing between each user PII data element of the first user and the first user himself, represented in the graph data model by his KYC ID identifier.

After that, the digital identity of the first user, characterized by his PII data elements, is stored in the first distributed ledger, but it is still only accessible by the first verification entity that encrypted it. On the other hand, attestations of the authenticity of these PII data elements is stored in the second distributed ledger along with relationships between PII data elements and users, enabling any entity authorized to access the second distributed ledger to perform some verifications on the relationships between different users having such a digital identity recorded in the system.

As already said, an example of verification entity may be a bank. In that case, the method described here above may be performed during a Know your customer (KYC) process for a first bank account creation. In that case, the method may comprise in addition a ninth recording step S109 of providing the first user with a first bank account number. An attestation may also be generated for this bank account number and recorded in the second distributed ledger, therefore creating a node representing it in the graph data model of the second distributed ledger.

### Sharing a digital identity

The invention also relates to methods enabling the first verification entity to share the verified digital identity of the first user with a second verification entity authorized to access the first distributed ledger and the second distributed ledger.

Such a sharing of a recorded digital identity involves steps performed by the computing device of the first verification entity sharing the digital identity, and steps performed by a second computing device of the second verification identity obtaining the verified digital identity of the first user.

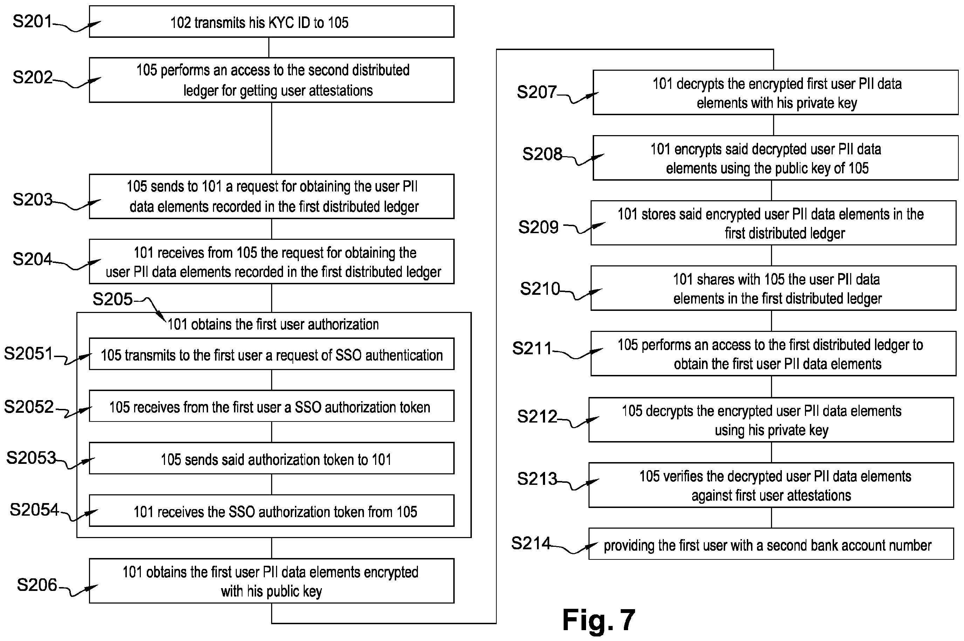

In a first sharing step S201, as described on **Figure 7****,** an event occurs at the second verification entity 105 which triggers the process of obtaining the digital identity of the first user. In the case of a second verification entity 105 being a second bank, described on **Figure 3b****,** this event may be a request from the first user to open a second bank account, this time in this second bank called Bank B. In order to inform the second verification entity that his digital identity has already been recorded in the first distributed ledger and may be reused, the first user may transmit in his request his user identifier KYC ID.

In a second sharing step S202, the second computing device 305 of the second verification entity 105, after receiving the first user identifier, performs an access to the second distributed ledger for getting user attestations for which a relationship with the first user identifier is stored in the second distributed ledger. Said differently, the computing device of the second verification entity reads all the attestations recorded for PII data elements of the first user.

In a third sharing step S203, the second computing device of the second verification entity sends to the first verification entity a request for obtaining the user personal identifiable information data elements recorded in the first distributed ledger for the first user. This request may include the user identifier KIC ID of the first user in order to identify for which user the request is performed.

In a fourth sharing step S204, the computing device of the first verification entity, which recorded the digital identity of the first user in the distributed ledgers as described above, receives, from the computing device of a second verification entity, the request for obtaining the user personal identifiable information data elements of the first user recorded in the first distributed ledger. At that step of the process, the first verification entity has no proof that the second verification identity was entitled to access the digital identity of the first user by the first user himself.

Consequently, in a fifth sharing step S205, the computing device of the first verification entity obtains the first user authorization to share with the second verification entity the first user personal identifiable information data elements.

In a sixth sharing step S206, the computing device of the first verification entity obtains the first user personal identifiable information data elements encrypted with the public key of the first verification entity. The computing device of the first verification entity may simply hold a copy of these encrypted PII data elements in its internal memory and read it there. Alternatively, it may use the first user identifier for finding attestations of the first user digital identity in the second distributed ledger and then obtain the encrypted PII data elements based on the document identifier or on the reference to the record of the location of said encrypted user personal identifiable information data elements in the first distributed ledger included in the first user attestations.

In an seventh sharing step S207, the computing device of the first verification entity may decrypt, using a private key of the first verification entity, said user personal identifiable information data elements encrypted with its public key.

In a eighth sharing step S208, the computing device of the first verification entity may encrypt said decrypted user personal identifiable information data elements using the public key of the second verification entity.

In a ninth sharing step S209, the computing device of the first verification entity may store in the first distributed ledger the first user personal identifiable information data elements encrypted with the public key of the second verification entity, in order to share said user PII data elements with the second verification entity.

In an tenth sharing step S210, the computing device of the first verification entity may warn the second verification entity that the user PII data elements encrypted with its secret key are available in the first distributed ledger. In the case where document identifiers are used, the second verification entity is able to find such encrypted user PII data elements using this document identifier. Otherwise, the first verification entity may share with the second verification entity the location in the first distributed ledger of the first user personal identifiable information data elements encrypted with the public key of the second verification entity. Such a sharing may be performed by simply sending to the computing device of the second verification entity a message including this location. Alternatively the computing device of the first verification entity may record in the second distributed ledger this location and new attestations using a reference to this record.

In a eleventh sharing step S211, the second computing device of the second verification entity performs an access to the first distributed ledger to obtain the first user personal identifiable information data elements encrypted with a public key of the second verification entity.

In a twelfth sharing step S212, the second computing device of the second verification entity decrypts the obtained encrypted user personal identifiable information data elements using a private key of the second verification entity.

In a thirteenth sharing step S213, the second computing device of the second verification entity verifies the decrypted first user personal identifiable information data elements against first user attestations using hashes of the user personal identifiable information data elements included in said user attestations. It enables to verify that the PII data elements transmitted by the computing device of the first verification entity indeed belong to the first user and are identical to the ones recorded when the digital identity of the first user was created.

By doing so, the second computing device of the second verification entity is able to gain knowledge of a verified digital identity of the first user, without performing itself major verifications and without asking the first user to provide his identity documents again.

As already said, an example of second verification entity may be a bank. In that case, the method described here above may be performed during a KYC process for a second bank account creation. In that case, the method may comprise in addition a fourteenth sharing step S214 of providing the first user with a second bank account number. An attestation may also be generated for this second bank account number and recorded in the second distributed ledger, therefore creating a node representing it in the graph data model of the second distributed ledger.

In the fifth sharing step S205, the computing device of the first verification entity obtains the first user authorization to share with the second verification entity the first user personal identifiable information data elements. In a first embodiment, such an authorization is obtained by the second computing device of the second verification entity and then transmitted to the computing device of the first verification entity. In order to do so, Single sign-on (SSO) authentication protocol may be used. In that case, the fifth sharing step S205 may include:
- A first SSO step S2051 during which the second computing device of the second verification entity transmits to the first user a request of SSO authentication,
- A second SSO step S2052 during which the second computing device of the second verification entity receives from the first user a SSO authorization token authorizing it to obtain the user personal identifiable information data elements,
- A third SSO step S2053 during which the second computing device of the second verification entity sends said authorization token to the first verification entity in order to obtain the user personal identifiable information data elements stored in the first distributed ledger.
- A fourth SSO step S2054 during which the computing device of the first verification entity receives the SSO authorization token from the second verification entity authorizing said second verification entity to obtain the user personal identifiable information data elements.

Alternatively, the computing device of the first verification entity may obtain the first user authorization to share with the second verification entity the first user personal identifiable information data elements, by simply asking the first user to authenticate himself to the computing device of the first verification entity.

During this sharing process, the first user may update his digital identity by providing a new identity document.

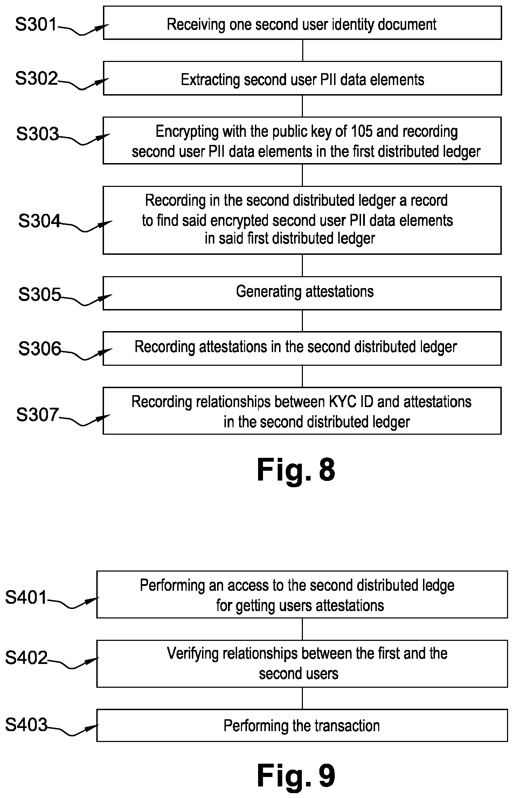

In that case, as depicted in **Figure 8****,** during a first update step S301, the second computing device of the second verification entity receives from the first user at least one second user identity document.

In a second update step S302, the second computing device of the second verification entity extracts second user personal identifiable information data elements from said second user identity document. As after the second recording step S102, these new PII data elements shall be verified, by the second verification entity.

In a third update step S303, the second computing device of the second verification entity, after verification of the second user personal identifiable information data elements, encrypts said verified second user personal identifiable information data elements using a public key of the second verification entity, and records said encrypted second user personal identifiable information data elements in the first distributed ledger. They may be recorded as a document record having a document identifier.

In a fourth update step S304, the second computing device of the second verification entity may record, in the second distributed ledger, either a document reference record including the document identifier of the document record stored in the first distributed ledger in the previous step, or the location of the encrypted second user personal identifiable information data elements in the first distributed ledger.

In a fifth update step S305, the second computing device of the second verification entity generates, after it has been verified, for each verified second user personal identifiable information data element, an attestation including the second verification entity identifier and a hash of the second user personal identifiable information data element. Said attestation may include also either the document identifier of the document record including said user PII data element in the first distributed ledger or a reference to the record of the location of the encrypted second user personal identifiable information data elements in the first distributed ledger.

In a sixth update step S306, the second computing device of the second verification entity records each generated attestation in the second distributed ledger.

In a seventh update step S307, the second computing device of the second verification entity records, for each generated attestation, the relationship between the first user identifier and the generated attestation in the second distributed ledger.

### Transaction verification

In addition to enabling a trusted second verification entity to gain knowledge of a verified digital identity of a user, the invention enables a verification entity to perform some verifications during a transaction between two users, without actually knowing the identity of these users. As shown on **Figure 3c****,** an example of such a transaction may be a wire transfer between two clients of two different banks.

The invention therefore also relates to a method for verifying a digital identity of a second user 106 having a second user identifier (KYC ID) during a transaction with a first user 102 having a first user identifier, performed, during said transaction, by a computing device of a verification entity authorized to perform accesses to the second distributed ledger 104 provided that identities of the first and second users have been recorded in the first distributed ledger as described above.

As described on **Figure 9****,** in a first verification step S401, after obtaining said first and second user identifiers, the computing device of the verification entity performs an access to the second distributed ledger for getting user attestations for which a relationship with the second user identifier is stored in said second distributed ledger and/or user attestations for which a relationship with the first user identifier is stored in said second distributed ledger. In the case of a bank performing verifications before a wire transfer, if one of the first and second users is a client of the bank, the bank already know the identity of this client and does not need to query the second distributed ledger for getting attestations related to this client.

In a second verification step S402, the computing device of the verification entity verifies relationships between the first and the second users based on said attestations. It can very easily check if the first and second user share any PII data element.

In a third verification step S403, the computing device of the verification entity performs the transaction when the verifications are successful.

The verification entity performing such a transaction verification may be a first bank requested by a first user having a first bank account in the first bank, to perform a money transfer with a second user having a second bank account in a second bank. In that case, in the third verification step S403 performing the transaction comprises transferring money from the first bank account to the second bank account.

In order to interact with the first and second distributed ledgers, for reading and writing data in it, each verification entity may use one or more dedicated smartcontracts recorded in the ledgers at permanent address. In order to be able to find easily the smart contract(s) of each verification entity, another smart-contract may be used, which may be called Bank-ID registry. It stores and provides for each verification entity the address(es) in the ledger of its smart-contract(s). Another smart-contract may be used similarly as registry for storing and providing the addresses in the second distributed ledger of all the attestations, KYC IDs and relationships recorded in the second distributed ledger.

According to an another aspect, the invention relates to a computer program product directly loadable into the memory of at least one computer, comprising software code instructions for performing, when said product is run on the computer, the steps of the method described here before.

## Claims

1. Method for recording a digital identity of a first user (102) comprising the steps, performed by a computing device (301) of a first verification entity (101) identified by a first verification entity identifier, of :
- a) receiving (S101) from the first user at least one first user identity document (302),
- b) extracting (S102) user personal identifiable information data elements from said user identity document,
- c) after verification of the user personal identifiable information data elements, encrypting said verified user personal identifiable information data elements using a public key of the first verification entity, and recording said encrypted user personal identifiable information data elements (304) in a first distributed ledger (103) whose access is authorized to a first set of computing devices only (S103),
- d) generating a user identifier (KYC ID) to be sent to said user and recording a hash of said user identifier in a second distributed ledger (104) (S105),
- e) generating (S106) for each verified user personal identifiable information data element, after it has been verified by the first verification entity (101), an attestation (303) including the first verification entity identifier and a hash of said user personal identifiable information data element,
- f) recording (S107) each generated attestation in said second distributed ledger (104),
- g) for each generated attestation, recording (S108) in said second distributed ledger (104) a relationship between the generated user identifier and said generated attestation, so as to record that said attestation has been generated for a user personal identifiable information data element characterizing the user identified by said generated identifier,
wherein said first and second distributed ledgers are distinct from one another and are configured such that access to the first distributed ledger is more restricted than access to the second distributed ledger in such a way that only said first set of computing devices authorized to access the first distributed ledger can access said user personal identifiable information data elements,
and wherein all data stored in the second distributed ledger form a graph data model in which each node represents an attestation of a user personal identifiable information data element or a user identifier, and wherein the links between the nodes of the model are recorded by the computing device (301) of the first verification entity (101) and
represent the relationships recorded in the second distributed ledger between user identifiers and said recorded attestations, such that any entity having access to the second distributed ledger is able to perform verifications on the relationship between users whose identities have been recorded in the ledgers without having access to said recorded identities.

2. The method of claim 1, wherein user identity documents (302) are among passport, national identification card, driver license, employee badge, military identification, student identifier, library card.

3. The method of claim 1, wherein user personal identifiable information data elements are among user name, user phone number, user addresses, driver license number, passport number, user bank account, national identification card information.

4. The method of claim 1 wherein the user identifier is a user's email address.

5. The method of claim 1 performed by a bank as first verification entity during a Know your customer (KYC) process for a first bank account creation comprising also providing (S109) a first bank account number.

6. A method for recording a digital identity of a first user comprising all the steps of claim 1 performed by a first computer of a first verification entity , and for obtaining a verified digital identity of the first user (102) having a user identifier (KYC ID), wherein the obtaining comprises the steps, performed by a
second computing device (305) of a second verification entity (105) authorized to access the first distributed ledger and the second distributed ledger, of :
- after receiving said user identifier, performing (S202) an access to the second distributed ledger for getting user attestations for which a relationship with said user identifier is stored in said second distributed ledger,
- sending (S203) to the first verification entity a request for obtaining the user personal identifiable information data elements recorded in the first distributed ledger for the first user,
- after user authorization has been given to the first verification entity, performing (S211) an access to the first distributed ledger to obtain user personal identifiable information data elements encrypted with a public key of the second verification entity, said first verification entity having obtained from the first distributed ledger said user personal identifiable information data elements encrypted with its public key, having decrypted said encrypted data elements using its private key, having encrypted said user personal identifiable information data elements using the public key of the second verification entity, and having stored in the first distributed ledger said data elements encrypted with the public key of the second verification entity,
- decrypting (S212) said obtained encrypted user personal identifiable information data elements using a private key of the second verification entity,
- verifying (S213) said user personal identifiable information data elements against said user attestations using hashes of the user personal identifiable information data elements included in said user attestations.

7. The method of claim 6, comprising the steps, performed by the computing device (305) of the second verification entity (105) and giving said user authorization to the first verification entity, of :
- transmitting (S2051) to the user a request of Single sign-on (SSO) authentication,
- receiving (S2052) from the user a Single sign-on (SSO) authorization token authorizing it to obtain the user personal identifiable information data elements,
- sending (S2053) said authorization token to the first verification entity in order to obtain the user personal identifiable information data elements stored in the first distributed ledger.

8. The method of claim 6, comprising further the steps, performed by the second computing device (305) of the second verification entity (105), of :
- a) receiving (S301) from said first user at least one second user identity document,
- b) extracting (S302) second user personal identifiable information data elements from said second user identity document,
- c) after verification of the second user personal identifiable information data elements, encrypting said verified second user personal identifiable information data elements using a public key of the second verification entity, and recording said encrypted second user personal identifiable information data elements in the first distributed ledger (S303),
- d) generating (S305) for each verified second user personal identifiable information data element, after it has been verified by the second verification entity, an attestation including the second verification entity identifier and a hash of said second user personal identifiable information data element,
- e) recording (S306) each generated attestation in said second distributed ledger,
- f) for each generated attestation, recording (S307) in said second distributed ledger a relationship between the generated first user identifier and said generated attestation.

9. A method for recording a digital identity of a first user (102) comprising all the steps of claim 1, performed by a computing device (301) of a first verification entity (101), and for sharing the digital identity of the user having a user identifier (KYC_ID) comprising the steps, performed by the computing device (301) of the first verification entity (101), of :
- receiving (S204), from a computing device of a second verification entity authorized to access the first distributed ledger and the second distributed ledger, a request for obtaining the user personal identifiable information data elements of said user recorded in the first distributed ledger,
- obtaining (S205) user authorization to share with said second verification entity said user personal identifiable information data elements,
- obtaining (S206) said user personal identifiable information data elements encrypted with the public key of the first verification entity,
- decrypting (S207), using a private key of the first verification entity, said user personal identifiable information data elements encrypted with its public key,
- encrypting (S208) said user personal identifiable information data elements using the public key of the second verification entity,
- storing (S209) in the first distributed ledger said user personal identifiable information data elements encrypted with the public key of the second verification entity, in order to share said user PII data elements with the second verification entity.

10. The method of claim 9 wherein obtaining user authorization to share with said second verification entity said user personal identifiable information data elements (S205) comprises : receiving (S2054) a Single sign-on (SSO) authorization token from the second verification entity authorizing said second verification entity to obtain the user personal identifiable information data elements, said Single sign-on (SSO) authorization token having been transmitted from the user to the second verification entity on request of this last one.

11. The method of claim 9 performed by a bank as verification entity during a KYC process for a second bank account creation comprising also providing a second bank account number (S214).

12. A method for recording digital identities of a first user (102) and of a second user (106) comprising all the steps of claim 1 performed by a computing device of a first verification entity, and for verifying the digital identity of the second user (106) having a second user identifier (KYC ID) during a transaction with the first user (102) having a first user identifier, the verifying being performed, during said transaction, by a computing device of a verification entity authorized to perform accesses to the second distributed ledger and comprising the steps of:
- after obtaining said first and second user identifiers, performing (S401) an access to the second distributed ledger for getting user attestations for which a relationship with said second user identifier is stored in said second distributed ledger and/or user attestations for which a relationship with said first user identifier is stored in said second distributed ledger,
- verifying (S402) relationships between the first and the second users based on said attestations,
- when the verifications are successful, performing (S403) said transaction.

13. The method of claim 12, wherein the verifying of the digital identities is performed by a computing device of a first bank as the verification entity requested by the first user having a first bank account in the first bank, to perform a money transfer with the second user having a second bank account
in a second bank wherein: performing said transaction comprises transferring money from the first bank account to the second bank account.

14. A computer program product directly loadable into the memory of at least one computer, comprising software code instructions for performing the steps of claim 1 when said product is run on the computer.

15. A computing device (301) of a first verification entity (101) identified by a first verification entity identifier and comprising a processor (401), a cryptoprocessor (402) and a communication interface (407) :
- said communication interface being configured for receiving from a first user at least one first user identity document,
- said processor being configured for extracting user personal identifiable information data elements from said user identity document,
- after verification of the user personal identifiable information data elements, said cryptoprocessor being configured for encrypting said verified user personal identifiable information data elements using a public key of the first verification entity, and said processor being configured for recording said encrypted user personal identifiable information data elements in a first distributed ledger whose access is authorized to a first set of computing devices only,
- said processor being configured for generating a user identifier (KYC ID) to be sent to said user and recording a hash of said user identifier in a second distributed ledger,
- said processor being configured for generating for each verified user personal identifiable information data element, after it has been verified by the first verification entity, an attestation including the first verification entity identifier and a hash of said user personal identifiable information data element,
- said processor being configured for recording each generated attestation in said second distributed ledger, and for each generated attestation, recording in said second distributed ledger a relationship between the generated user identifier and said generated attestation, so as to record that said attestation has been generated for a user personal identifiable information data element characterizing the user identified by said generated identifier,
wherein said first and second distributed ledgers are distinct from one another and are configured such that access to the first distributed ledger is more restricted than access to the second distributed ledger in such a way that only said first set of computing devices authorized to access the first distributed ledger can access said user personal identifiable information data elements
and wherein all data stored in the second distributed ledger form a graph data model in which each node represents an attestation of a user personal identifiable information data element or a user identifier, and wherein the links between the nodes of the model are recorded by the computing device (301) of the first verification entity and represent the relationships recorded in the second distributed ledger between user identifiers and said recorded attestations, such that any entity having access to the second distributed ledger is able to perform verifications on the relationship between users whose identities have been recorded in the ledgers without having access to said recorded identities.

## Patentansprüche

1. Verfahren zum Aufzeichnen einer digitalen Identität eines ersten Benutzers (102), umfassend die Schritte, die von einer Rechenvorrichtung (301) einer ersten Verifizierungsentität (101) durchgeführt werden, die durch eine erste Verifizierungsentitätskennung identifiziert wird:
- a) Empfangen (S101), von dem ersten Benutzer kommend, mindestens eines ersten Benutzeridentitätsdokuments (302),
- b) Extrahieren (S102) von benutzerpersonenbezogenen identifizierbaren Informationsdatenelementen aus dem Benutzeridentitätsdokument,
- c) nach Verifizierung der benutzerpersonenbezogenen identifizierbaren Informationsdatenelemente, Verschlüsseln der verifizierten benutzerpersonenbezogenen identifizierbaren Informationsdatenelemente unter Verwendung eines öffentlichen Schlüssels der ersten Verifizierungsentität und Aufzeichnen der verschlüsselten benutzerpersonenbezogenen identifizierbaren Informationsdatenelemente (304) in einem ersten distributed Ledger (103), dessen Zugriff nur auf einen ersten Satz von Rechenvorrichtungen berechtigt wird (S103),
- d) Erzeugen einer Benutzerkennung (KYC-ID), die an den Benutzer gesendet werden soll, und Aufzeichnen eines Hash der Benutzerkennung in einem zweiten distributed Ledger (104) (S105),
- e) Erzeugen (S106), für jedes verifizierte benutzerpersonenbezogene identifizierbare Informationsdatenelement, nachdem es durch die erste Verifizierungsentität (101) verifiziert wurde, einer Attestation (303), welche die erste Verifizierungsentitätskennung und einen Hash des benutzerpersonenbezogenen identifizierbaren Informationsdatenelements einschließt,
- f) Aufzeichnen (S107) jeder erzeugten Attestation in dem zweiten distributed Ledger (104),
- g) für jede erzeugte Attestation, Aufzeichnen (S108), in dem zweiten distributed Ledger (104), einer Beziehung zwischen der erzeugten Benutzerkennung und der erzeugten Attestation, um aufzuzeichnen, dass die Attestation für ein benutzerpersonenbezogenes identifizierbares Informationsdatenelement erzeugt wurde, das den durch die erzeugte Kennung identifizierten Benutzer **kennzeichnet,**
wobei der erste und der zweite distributed Ledger voneinander verschieden sind und derart konfiguriert sind, dass ein Zugriff auf den ersten distributed Ledger stärker eingeschränkt ist als der Zugriff auf den zweiten distributed Ledger, so dass nur der erste Satz von Rechenvorrichtungen, der für den Zugriff auf den ersten distributed Ledger berechtigt ist, auf die benutzerpersonenbezogenen identifizierbaren Informationsdatenelemente zugreifen kann,
und wobei alle Daten, die in dem zweiten distributed Ledger gespeichert sind, ein Graphendatenmodell bilden, in dem jeder Knoten eine Attestation eines benutzerpersonenbezogenen identifizierbaren Informationsdatenelements oder einer Benutzerkennung darstellt, und wobei die Verbindungen zwischen den Knoten des Modells von der Rechenvorrichtung (301) der ersten Verifizierungsentität (101) aufgezeichnet werden und die in dem zweiten distributed Ledger aufgezeichneten Beziehungen zwischen Benutzerkennungen und den aufgezeichneten Attestationen darstellen, so dass jede Entität, die Zugriff auf den zweiten distributed Ledger hat, in der Lage ist, Verifizierungen an der Beziehung zwischen Benutzern durchzuführen, deren Identitäten in den Ledgers aufgezeichnet wurden, ohne Zugriff auf die aufgezeichneten Identitäten zu haben.

2. Verfahren nach Anspruch 1, wobei Benutzeridentitätsdokumente (302) zu Reisepass, Personalausweis, Führerschein, Mitarbeiterausweis, Militärkennung, Studentenausweis, Bibliothekskarte gehören.

3. Verfahren nach Anspruch 1, wobei benutzerpersonenbezogene identifizierbare Informationsdatenelemente zu Benutzername, Benutzertelefonnummer, Benutzeradressen, Führerscheinnummer, Reisepassnummer, Benutzerbankkonto, Personalausweisinformationen gehören.

4. Verfahren nach Anspruch 1, wobei die Benutzerkennung eine E-Mail-Adresse des Benutzers ist.

5. Verfahren nach Anspruch 1, das von einer Bank als erste Verifizierungsentität während eines Kunden-Kennen-Prozesses (KYC-Prozesses) für eine erste Bankkontoerstellung durchgeführt wird, umfassend auch ein Bereitstellen (S109) einer ersten Bankkontonummer.

6. Verfahren zum Aufzeichnen einer digitalen Identität eines ersten Benutzers, umfassend alle Schritte nach Anspruch 1, die von einem ersten Computer einer ersten Verifizierungsentität durchgeführt werden, und zum Erhalten einer verifizierten digitalen Identität des ersten Benutzers (102) mit einer Benutzerkennung (KYC-ID),
wobei das Erhalten die Schritte, die von einer zweiten Rechenvorrichtung (305) einer zweiten Verifizierungsentität (105) durchgeführt werden, die berechtigt ist, auf den ersten distributed Ledger und den zweiten distributed Ledger zuzugreifen, umfasst:
- nach dem Empfangen der Benutzerkennung, Durchführen (S202) eines Zugriffs auf den zweiten distributed Ledger zum Bekommen von Benutzerattestationen, für die eine Beziehung mit der Benutzerkennung in dem zweiten distributed Ledger gespeichert ist,
- Senden (S203) einer Anforderung zum Erhalten der benutzerpersonenbezogenen identifizierbaren Informationsdatenelemente, die in dem ersten distributed Ledger für den ersten Benutzer aufgezeichnet sind, an die erste Verifizierungsentität,
- nach Erteilung der Benutzerberechtigung an die erste Verifizierungsentität, Durchführen (S211) eines Zugriffs auf den ersten distributed Ledger, um benutzerpersonenbezogene identifizierbare Informationsdatenelemente zu erhalten, die mit einem öffentlichen Schlüssel der zweiten Verifizierungsentität verschlüsselt sind, wobei die erste Verifizierungsentität von dem ersten distributed Ledger die benutzerpersonenbezogenen identifizierbaren Informationsdatenelemente erhalten hat, die mit seinem öffentlichen Schlüssel verschlüsselt sind, die verschlüsselten Datenelemente unter Verwendung seines privaten Schlüssels entschlüsselt hat, die benutzerpersonenbezogenen identifizierbaren Informationsdatenelemente unter Verwendung des öffentlichen Schlüssels der zweiten Verifizierungsentität verschlüsselt hat und in dem ersten distributed Ledger die Datenelemente, die mit dem öffentlichen Schlüssel der zweiten Verifizierungsentität verschlüsselt sind, gespeichert hat,
- Entschlüsseln (S212) der erhaltenen verschlüsselten benutzerpersonenbezogenen identifizierbaren Informationsdatenelemente unter Verwendung eines privaten Schlüssels der zweiten Verifizierungsentität,
- Verifizieren (S213) der benutzerpersonenbezogenen identifizierbaren Informationsdatenelemente gegen die Benutzerattestationen unter Verwendung von Hashes der benutzerpersonenbezogenen identifizierbaren Informationsdatenelemente, die in den Benutzerattestationen eingeschlossen sind.

7. Verfahren nach Anspruch 6, umfassend die Schritte, die von der Rechenvorrichtung (305) der zweiten Verifizierungsentität (105) durchgeführt werden und die Benutzerberechtigung an die erste Verifizierungsentität erteilen:
- Übertragen (S2051) einer Anforderung einer Authentifizierung für die einmalige Anmeldung (SSO) an den Benutzer,
- Empfangen (S2052), von dem Benutzer kommend, eines Authentifizierungstokens für die einmalige Anmeldung (SSO), das ihn berechtigt, die benutzerpersonenbezogenen identifizierbaren Informationsdatenelemente zu erhalten,
- Senden (S2053) des Authentifizierungstokens an die erste Verifizierungsentität, um die benutzerpersonenbezogenen identifizierbaren Informationsdatenelemente zu erhalten, die in dem ersten distributed Ledger gespeichert sind.

8. Verfahren nach Anspruch 6, ferner umfassend die Schritte, die von der zweiten Rechenvorrichtung (305) der zweiten Verifizierungsentität (105) durchgeführt werden:
- a) Empfangen (S301) von mindestens einem zweiten Benutzeridentitätsdokument von dem ersten Benutzer kommend,
- b) Extrahieren (S302) von zweiten benutzerpersonenbezogenen identifizierbaren Informationsdatenelementen aus dem zweiten Benutzeridentitätsdokument,
- c) nach Verifizierung der zweiten benutzerpersonenbezogenen identifizierbaren Informationsdatenelemente, Verschlüsseln der verifizierten zweiten benutzerpersonenbezogenen identifizierbaren Informationsdatenelemente unter Verwendung eines öffentlichen Schlüssels der zweiten Verifizierungsentität und Aufzeichnen der verschlüsselten zweiten benutzerpersonenbezogenen identifizierbaren Informationsdatenelemente in dem ersten distributed Ledger (S103),
- d) Erzeugen (S305), für jedes verifizierte zweite benutzerpersonenbezogene identifizierbare Informationsdatenelement, nachdem es durch die zweite Verifizierungsentität verifiziert wurde, einer Attestation, welche die zweite Verifizierungsentitätskennung und einen Hash des zweiten benutzerpersonenbezogenen identifizierbaren Informationsdatenelements einschließt,
- e) Aufzeichnen (S306) jeder erzeugten Attestation in dem zweiten distributed Ledger,
- f) für jede erzeugte Attestation, Aufzeichnen (S307), in dem zweiten distributed Ledger, einer Beziehung zwischen der erzeugten ersten Benutzerkennung und der erzeugten Attestation.

9. Verfahren zum Aufzeichnen einer digitalen Identität eines ersten Benutzers (102), umfassend alle Schritte nach Anspruch 1, die von einer Rechenvorrichtung (301) einer ersten Verifizierungsentität (101) durchgeführt werden, und zum Teilen der digitalen Identität des Benutzers mit einer Benutzerkennung (KYC_ID), umfassend die Schritte, die von der Rechenvorrichtung (301) der ersten Verifizierungsentität (101) durchgeführt werden:
- Empfangen (S204), von einer Rechenvorrichtung einer zweiten Verifizierungsentität kommend, die berechtigt ist, auf den ersten distributed Ledger und den zweiten distributed Ledger zuzugreifen, einer Anforderung zum Erhalten der benutzerpersonenbezogenen identifizierbaren Informationsdatenelemente des Benutzers, die in dem ersten distributed Ledger aufgezeichnet sind,
- Erhalten (S205) einer Benutzerberechtigung, um mit der zweiten Verifizierungsentität die benutzerpersonenbezogenen identifizierbaren Informationsdatenelemente zu teilen,
- Erhalten (S206) der benutzerpersonenbezogenen identifizierbaren Informationsdatenelemente, die mit dem öffentlichen Schlüssel der ersten Verifizierungsentität verschlüsselt sind,
- Entschlüsseln (S207), unter Verwendung eines privaten Schlüssels der ersten Verifizierungsentität, der benutzerpersonenbezogenen identifizierbaren Informationsdatenelemente, die mit ihrem öffentlichen Schlüssel verschlüsselt sind,
- Verschlüsseln (S208) der benutzerpersonenbezogenen identifizierbaren Informationsdatenelemente unter Verwendung des öffentlichen Schlüssels der zweiten Verifizierungsentität,
- Speichern (S209), in dem ersten distributed Ledger, der benutzerpersonenbezogenen identifizierbaren Informationsdatenelemente, die mit dem öffentlichen Schlüssel der zweiten Verifizierungsentität verschlüsselt sind, um die Benutzer-PII-Datenelemente mit der zweiten Verifizierungsentität zu teilen.

10. Verfahren nach Anspruch 9, wobei das Erhalten einer Benutzerberechtigung zum Teilen der benutzerpersonenbezogenen identifizierbaren Informationsdatenelemente (S205) mit der zweiten Verifizierungsentität umfasst: Empfangen (S2054) eines Authentifizierungstokens für die einmalige Anmeldung (SSO) von der zweiten Verifizierungsentität kommend, das die zweite Verifizierungsentität berechtigt, die benutzerpersonenbezogenen identifizierbaren Informationsdatenelemente zu erhalten, wobei der Authentifizierungstoken für die einmalige Anmeldung (SSO) von dem Benutzer an die zweite Verifizierungsentität auf Anforderung letzterer übertragen wurde.

11. Verfahren nach Anspruch 9, das von einer Bank als Verifizierungsentität während eines KYC-Prozesses für eine zweite Bankkontoerstellung durchgeführt wird, umfassend auch ein Bereitstellen einer zweiten Bankkontonummer (S214).

12. Verfahren zum Aufzeichnen digitaler Identitäten eines ersten Benutzers (102) und eines zweiten Benutzers (106), umfassend alle Schritte nach Anspruch 1, die von einer Rechenvorrichtung einer ersten Verifizierungsentität durchgeführt werden, und zum Verifizieren der digitalen Identität des zweiten Benutzers (106) mit einer zweiten Benutzerkennung (KYC-ID) während einer Transaktion mit dem ersten Benutzer (102) mit einer ersten Benutzerkennung, wobei das Verifizieren während der Transaktion durch eine Rechenvorrichtung einer Verifizierungsentität durchgeführt wird, die zum Durchführen von Zugriffen auf den zweiten distributed Ledger berechtigt ist, und umfassend die Schritte:
- nach Erhalten der ersten und zweiten Benutzerkennung, Durchführen (S401) eines Zugriffs auf den zweiten distributed Ledger, um Benutzerattestationen, für die eine Beziehung mit der zweiten Benutzerkennung in dem zweiten distributed Ledger gespeichert ist, und/oder Benutzerattestationen, für die eine Beziehung mit der ersten Benutzerkennung in dem zweiten distributed Ledger gespeichert ist, zu erhalten,
- Verifizieren (S402) von Beziehungen zwischen dem ersten und dem zweiten Benutzer basierend auf den Attestationen,
- wenn die Verifizierungen erfolgreich sind, Durchführen (S403) der Transaktion.

13. Verfahren nach Anspruch 12, wobei das Verifizieren der digitalen Identitäten durch eine Rechenvorrichtung einer ersten Bank durchgeführt wird, wenn die Verifizierungsentität, die von dem ersten Benutzer mit einem ersten Bankkonto in der ersten Bank angefordert wird, eine Geldüberweisung mit dem zweiten Benutzer mit einem zweiten Bankkonto in einer zweiten Bank durchführt, wobei: das Durchführen der Transaktion ein Überweisen von Geld von dem ersten Bankkonto auf das zweite Bankkonto umfasst.

14. Computerprogrammprodukt, das direkt in den Speicher mindestens eines Computers ladbar ist, umfassend Softwarecodeanweisungen zum Durchführen der Schritte nach Anspruch 1, wenn das Produkt auf dem Computer ausgeführt wird.

15. Rechenvorrichtung (301) einer ersten Verifizierungsentität (101), die durch eine erste Verifizierungsentitätskennung identifiziert wird und einen Prozessor (401), einen Kryptoprozessor (402) und eine Kommunikationsschnittstelle (407) umfasst:
- wobei die Kommunikationsschnittstelle konfiguriert ist, um von einem ersten Benutzer mindestens ein erstes Benutzeridentitätsdokument zu empfangen,
- wobei der Prozessor konfiguriert ist, um benutzerpersonenbezogene identifizierbare Informationsdatenelemente aus dem Benutzeridentitätsdokument zu extrahieren,
- wobei nach Verifizierung der benutzerpersonenbezogenen identifizierbaren Informationsdatenelemente der Kryptoprozessor zum Verschlüsseln der verifizierten benutzerpersonenbezogenen identifizierbaren Informationsdatenelemente unter Verwendung eines öffentlichen Schlüssels der ersten Verifizierungsentität konfiguriert ist und der Prozessor zum Aufzeichnen der verschlüsselten benutzerpersonenbezogenen identifizierbaren Informationsdatenelemente in einem ersten distributed Ledger, dessen Zugriff nur auf einen ersten Satz von Rechenvorrichtungen berechtigt wird, konfiguriert ist,
- wobei der Prozessor zum Erzeugen einer Benutzerkennung (KYC-ID), die an den Benutzer gesendet werden soll, und zum Aufzeichnen eines Hashes der Benutzerkennung in einem zweiten distributed Ledger konfiguriert ist,
- wobei der Prozessor zum Erzeugen, für jedes verifizierte benutzerpersonenbezogene identifizierbare Informationsdatenelement, nachdem es durch die erste Verifizierungsentität verifiziert wurde, einer Attestation, welche die erste Verifizierungsentitätskennung und einen Hash des benutzerpersonenbezogenen identifizierbaren Informationsdatenelements einschließt, konfiguriert ist,
- wobei der Prozessor zum Aufzeichnen jeder erzeugten Attestation in dem zweiten distributed Ledger und, für jede erzeugte Attestation zum Aufzeichnen, in dem zweiten distributed Ledger, einer Beziehung zwischen der erzeugten Benutzerkennung und der erzeugten Attestation konfiguriert ist, um aufzuzeichnen, dass die Attestation für ein benutzerpersonenbezogenes identifizierbares Informationsdatenelement erzeugt wurde, das den durch die erzeugte Kennung identifizierten Benutzer **kennzeichnet,**
wobei der erste und der zweite distributed Ledger voneinander verschieden sind und derart konfiguriert sind, dass der Zugriff auf den ersten distributed Ledger stärker eingeschränkt ist als der Zugriff auf den zweiten distributed Ledger, so dass nur der erste Satz von Rechenvorrichtungen, der für den Zugriff auf den ersten distributed Ledger berechtigt ist, auf die benutzerpersonenbezogenen identifizierbaren Informationsdatenelemente zugreifen kann
und wobei alle Daten, die in dem zweiten distributed Ledger gespeichert sind, ein Graphendatenmodell bilden, in dem jeder Knoten eine Attestation eines benutzerpersonenbezogenen identifizierbaren Informationsdatenelements oder einer Benutzerkennung darstellt, und wobei die Verbindungen zwischen den Knoten des Modells von der Rechenvorrichtung (301) der ersten Verifizierungsentität aufgezeichnet werden und die in dem zweiten distributed Ledger aufgezeichneten Beziehungen zwischen Benutzerkennungen und den aufgezeichneten Attestationen darstellen, so dass jede Entität, die Zugriff auf den zweiten distributed Ledger hat, in der Lage ist, Verifizierungen an der Beziehung zwischen Benutzern durchzuführen, deren Identitäten in den Ledgers aufgezeichnet wurden, ohne Zugriff auf die aufgezeichneten Identitäten zu haben.

## Revendications

1. Procédé pour enregistrer une identité numérique d'un premier utilisateur (102) comprenant les étapes, réalisées par un dispositif informatique (301) d'une première entité de vérification (101) identifiée par un identificateur de première entité de vérification, consistant à :
- a) recevoir (S101) à partir du premier utilisateur au moins un premier document d'identité d'utilisateur (302),
- b) extraire (S102) des éléments de données d'informations personnelles identifiables d'utilisateur à partir dudit document d'identité d'utilisateur,
- c) après vérification des éléments de données d'informations personnelles identifiables d'utilisateur, chiffrer lesdits éléments de données d'informations personnelles identifiables d'utilisateur vérifiés en utilisant une clé publique de la première entité de vérification et enregistrer lesdits éléments de données d'informations personnelles identifiables d'utilisateur chiffrés (304) dans un premier registre distribué (103) dont l'accès est autorisé uniquement à un premier ensemble de dispositifs informatiques (S103),
- d) générer un identificateur d'utilisateur (KYC ID) à envoyer audit utilisateur et enregistrer un hachage dudit identificateur d'utilisateur dans un second registre distribué (104) (S105),
- e) générer (S106) pour chaque élément de données d'informations personnelles identifiables d'utilisateur vérifié, après qu'il a été vérifié par la première entité de vérification (101), une attestation (303) incluant l' identificateur de première entité de vérification et un hachage dudit élément de données d'informations personnelles identifiables d'utilisateur,
- f) enregistrer (S107) chaque attestation générée dans ledit second registre distribué (104),
- g) pour chaque attestation générée, enregistrer (S108) dans ledit second registre distribué (104) une relation entre l'identificateur d'utilisateur généré et ladite attestation générée, de manière à enregistrer que ladite attestation a été générée pour un élément de données d'informations personnelles identifiables d'utilisateur **caractérisant** l'utilisateur identifié par ledit identificateur généré,
dans lequel lesdits premier et second registres distribués sont distincts l'un de l'autre et sont configurés de telle sorte que l'accès au premier registre distribué est plus restreint que l'accès au second registre distribué de telle sorte que seul ledit premier ensemble de dispositifs informatiques autorisés à accéder au premier registre distribué peut accéder auxdits éléments de données d'informations personnelles identifiables d'utilisateur,
et dans lequel toutes les données stockées dans le second registre distribué forment un modèle de données de graphe dans lequel chaque nœud représente une attestation d'un élément de données d'informations personnelles identifiables d'utilisateur ou un identificateur d'utilisateur et dans lequel les liaisons entre les nœuds du modèle sont enregistrées par le dispositif informatique (301) de la première entité de vérification (101) et représentent les relations enregistrées dans le second registre distribué entre des identificateurs d'utilisateurs et lesdites attestations enregistrées, de sorte que toute entité ayant accès au second registre distribué est en mesure d'effectuer des vérifications sur la relation entre des utilisateurs dont les identités ont été enregistrées dans les registres sans avoir accès auxdites identités enregistrées.

2. Procédé selon la revendication 1, dans lequel les documents d'identité d'utilisateur (302) sont parmi un passeport, une carte d'identité nationale, un permis de conduire, un badge d'employé, une identification militaire, un identificateur d'étudiant, une carte de bibliothèque.

3. Procédé selon la revendication 1, dans lequel les éléments de données d'informations personnelles identifiables d'utilisateur sont parmi le nom de l'utilisateur, le numéro de téléphone de l'utilisateur, les adresses de l'utilisateur, le numéro de permis de conduire, le numéro de passeport, le compte bancaire de l'utilisateur, les informations de carte d'identité nationale.

4. Procédé selon la revendication 1, dans lequel l'identificateur d'utilisateur est une adresse électronique d'un utilisateur.

5. Procédé selon la revendication 1, exécuté par une banque en tant que première entité de vérification pendant un processus de connaissance du client (KYC) pour la création d'un premier compte bancaire comprenant également la fourniture (S109) d'un premier numéro de compte bancaire.

6. Procédé pour enregistrer une identité numérique d'un premier utilisateur comprenant toutes les étapes de la revendication 1, effectuées par un premier ordinateur d'une première entité de vérification et pour obtenir une identité numérique vérifiée du premier utilisateur (102) ayant un identificateur d'utilisateur (KYC ID),
dans lequel l'obtention comprend les étapes, réalisées par un second dispositif informatique (305) d'une seconde entité de vérification (105) autorisée à accéder au premier registre distribué et au second registre distribué, consistant à :
- après avoir reçu ledit identificateur d'utilisateur, effectuer (S202) un accès au second registre distribué pour obtenir des attestations d'utilisateurs pour lesquelles une relation avec ledit identificateur d'utilisateur est stockée dans ledit second registre distribué,
- envoyer (S203) à la première entité de vérification une demande d'obtention des éléments de données d'informations personnelles identifiables d'utilisateur enregistrés dans le premier registre distribué pour le premier utilisateur,
- après qu'une autorisation d'utilisateur a été donnée à la première entité de vérification, effectuer (S211) un accès au premier registre distribué pour obtenir des éléments de données d'informations personnelles identifiables d'utilisateur chiffrés avec une clé publique de la seconde entité de vérification, ladite première entité de vérification ayant obtenu auprès du premier registre distribué lesdits éléments de données d'informations personnelles identifiables d'utilisateur chiffrés avec sa clé publique, ayant déchiffré lesdits éléments de données chiffrés en utilisant sa clé privée, ayant chiffré lesdits éléments de données d'informations personnelles identifiables d'utilisateur en utilisant la clé publique de la seconde entité de vérification et ayant stocké dans le premier registre distribué, lesdits éléments de données chiffrés avec la clé publique de la seconde entité de vérification,
- déchiffrer (S212) lesdits éléments de données d'informations personnelles identifiables d'utilisateur chiffrés obtenus en utilisant une clé privée de la seconde entité de vérification,
- vérifier (S213) lesdits éléments de données d'informations personnelles identifiables d'utilisateur par rapport auxdites attestations d'utilisateurs en utilisant des hachages des éléments de données d'informations personnelles identifiables d'utilisateur inclus dans lesdites attestations d'utilisateurs.

7. Procédé selon la revendication 6, comprenant les étapes, exécutées par le dispositif informatique (305) de la seconde entité de vérification (105) et donnant ladite autorisation d'utilisateur à la première entité de vérification, consistant à :
- transmettre (S2051) à l'utilisateur une demande d'authentification d'ouverture de session unique (SSO),
- recevoir (S2052) à partir de l'utilisateur un jeton d'autorisation d'ouverture de session unique (SSO) l'autorisant à obtenir les éléments de données d'informations personnelles identifiables d'utilisateur,
- envoyer (S2053) ledit jeton d'autorisation à la première entité de vérification afin d'obtenir les éléments de données d'informations personnelles identifiables d'utilisateur stockés dans le premier registre distribué.

8. Procédé selon la revendication 6, comprenant en outre les étapes, exécutées par le second dispositif informatique (305) de la seconde entité de vérification (105), consistant à :
- a) recevoir (S301) à partir dudit premier utilisateur au moins un second document d'identité d'utilisateur,
- b) extraire (S302) de seconds éléments de données d'informations personnelles identifiables d'utilisateur à partir dudit second document d'identité d'utilisateur,
- c) après vérification des seconds éléments de données d'informations personnelles identifiables d'utilisateur, chiffrer lesdits seconds éléments de données d'informations personnelles identifiables d'utilisateur vérifiés en utilisant une clé publique de la seconde entité de vérification et enregistrer lesdits seconds éléments de données d'informations personnelles identifiables d'utilisateur chiffrés dans le premier registre distribué (S303),
- d) générer (S305) pour chaque second élément de données d'informations personnelles identifiables d'utilisateur vérifié, après qu'il a été vérifié par la seconde entité de vérification, une attestation incluant le second identificateur d'entité de vérification et un hachage dudit second élément de données d'informations personnelles identifiables d'utilisateur,
- e) enregistrer (S306) chaque attestation générée dans ledit second registre distribué,
- f) pour chaque attestation générée, enregistrer (S307) dans ledit second registre distribué une relation entre le premier identificateur d'utilisateur généré et ladite attestation générée.

9. Procédé d'enregistrement d'une identité numérique d'un premier utilisateur (102) comprenant toutes les étapes de la revendication 1, réalisées par un dispositif informatique (301) d'une première entité de vérification (101) et pour partager l'identité numérique de l'utilisateur ayant un identificateur d'utilisateur (KYC_ID) comprenant les étapes, réalisées par le dispositif informatique (301) de la première
entité de vérification (101), consistant à :
- recevoir (S204), à partir d'un dispositif informatique d'une seconde entité de vérification autorisée à accéder au premier registre distribué et au second registre distribué, une demande d'obtention des éléments de données d'informations personnelles identifiables d'utilisateur dudit utilisateur enregistrés dans le premier registre distribué,
- obtenir (S205) l'autorisation de l'utilisateur de partager avec ladite seconde entité de vérification lesdits éléments de données d'informations personnelles identifiables d'utilisateur,
- obtenir (S206) lesdits éléments de données d'informations personnelles identifiables d'utilisateur chiffrés avec la clé publique de la première entité de vérification,
- déchiffrer (S207), en utilisant une clé privée de la première entité de vérification, lesdits éléments de données d'informations personnelles identifiables d'utilisateur chiffrés avec sa clé publique,
- chiffrer (S208) lesdits éléments de données d'informations personnelles identifiables d'utilisateur en utilisant la clé publique de la seconde entité de vérification,
- stocker (S209) dans le premier registre distribué lesdits éléments de données d'informations personnelles identifiables d'utilisateur chiffrés avec la clé publique de la seconde entité de vérification, afin de partager lesdits éléments de données d'informations personnelles identifiables d'utilisateur avec la seconde entité de vérification.

10. Procédé selon la revendication 9, dans lequel l'obtention de l'autorisation de l'utilisateur pour partager avec ladite seconde entité de vérification lesdits éléments de données d'informations personnelles identifiables d'utilisateur (S205) comprend de : recevoir (S2054) un jeton d'autorisation d'ouverture de session unique (SSO) à partir de la seconde entité de vérification autorisant ladite seconde entité de vérification à obtenir les éléments de données d'informations personnelles identifiables d'utilisateur, ledit jeton d'autorisation d'ouverture de session unique (SSO) ayant été transmis par l'utilisateur à la seconde entité de vérification à la demande de cette dernière.

11. Procédé selon la revendication 9 exécuté par une banque en tant qu'entité de vérification pendant un processus KYC pour la création d'un second compte bancaire comprenant également la fourniture d'un second numéro de compte bancaire (S214).

12. Procédé pour enregistrer des identités numériques d'un premier utilisateur (102) et d'un second utilisateur (106) comprenant toutes les étapes de la revendication 1 exécutées par un dispositif informatique d'une première entité de vérification et pour vérifier l'identité numérique du second utilisateur (106) ayant un second identificateur d'utilisateur (KYC ID) pendant une transaction avec le premier utilisateur (102) ayant un premier identificateur d'utilisateur, la vérification étant exécutée, pendant ladite transaction, par un dispositif informatique d'une entité de vérification autorisée à effectuer des accès au second registre distribué et comprenant les étapes consistant à :
- après avoir obtenu lesdits premier et second identificateurs d'utilisateur, effectuer (S401) un accès au second registre distribué pour obtenir des attestations d'utilisateurs pour lesquelles une relation avec ledit second identificateur d'utilisateur est stockée dans ledit second registre distribué et/ou des attestations d'utilisateurs pour lesquelles une relation avec ledit premier identificateur d'utilisateur est stockée dans ledit second registre distribué,
- vérifier (S402) les relations entre le premier et le second utilisateur sur la base desdites attestations,
- lorsque les vérifications sont réussies, effectuer (S403) ladite transaction.

13. Procédé selon la revendication 12, dans lequel la vérification des identités numériques est effectuée par un dispositif informatique d'une première banque en tant qu'entité de vérification, demandée par le premier utilisateur ayant un premier compte bancaire dans la première banque, pour effectuer un transfert d'argent avec le second utilisateur ayant un second compte bancaire dans une seconde banque, dans lequel : l'exécution de ladite transaction comprend le transfert d'argent du premier compte bancaire au second compte bancaire.

14. Produit de programme informatique pouvant être chargé directement dans la mémoire d'au moins un ordinateur, comprenant des instructions de code logiciel pour exécuter les étapes de la revendication 1 lorsque ledit produit est exécuté sur l'ordinateur.

15. Dispositif informatique (301) d'une première entité de vérification (101) identifiée par un premier identificateur d'entité de vérification et comprenant un processeur (401), un cryptoprocesseur (402) et une interface de communication (407) :
- ladite interface de communication étant configurée pour recevoir à partir d'un premier utilisateur au moins un premier document d'identité d'utilisateur,
- ledit processeur étant configuré pour extraire des éléments de données d'informations personnelles identifiables d'utilisateur à partir dudit document d'identité d'utilisateur,
- après vérification des éléments de données d'informations personnelles identifiables d'utilisateur, ledit cryptoprocesseur étant configuré pour chiffrer lesdits éléments de données d'informations personnelles identifiables d'utilisateur vérifiés en utilisant une clé publique de la première entité de vérification et ledit processeur étant configuré pour enregistrer lesdits éléments de données d'informations personnelles identifiables d'utilisateur chiffrés dans un premier registre distribué dont l'accès est autorisé uniquement à un premier ensemble de dispositifs informatiques,
- ledit processeur étant configuré pour générer un identificateur d'utilisateur (KYC ID) à envoyer audit utilisateur et enregistrer un hachage dudit identificateur d'utilisateur dans un second registre distribué,
- ledit processeur étant configuré pour générer pour chaque élément de données d'informations personnelles identifiables d'utilisateur vérifié, après qu'il a été vérifié par la première entité de vérification, une attestation incluant l'identificateur de la première entité de vérification et un hachage dudit élément de données d'informations personnelles identifiables d'utilisateur,
- ledit processeur étant configuré pour enregistrer chaque attestation générée dans ledit second registre distribué et, pour chaque attestation générée, enregistrer dans ledit second registre distribué une relation entre l'identificateur d'utilisateur généré et ladite attestation générée, de manière à enregistrer que ladite attestation a été générée pour un élément de données d'informations personnelles identifiables d'utilisateur **caractérisant** l'utilisateur identifié par ledit identificateur généré,
dans lequel lesdits premier et second registres distribués sont distincts l'un de l'autre et sont configurés de telle sorte que l'accès au premier registre distribué est plus restreint que l'accès au second registre distribué de telle sorte que seul ledit premier ensemble de dispositifs informatiques autorisés à accéder au premier registre distribué peut accéder auxdits éléments de données d'informations personnelles identifiables d'utilisateur
et dans lequel toutes les données stockées dans le second registre distribué forment un modèle de données de graphe dans lequel chaque nœud représente une attestation d'un élément de données d'informations personnelles identifiables d'utilisateur ou un identificateur d'utilisateur et dans lequel les liaisons entre les nœuds du modèle sont enregistrées par le dispositif informatique (301) de la première entité de vérification et représentent les relations enregistrées dans le second registre distribué entre les identificateurs d'utilisateurs et lesdites attestations enregistrées, de sorte que toute entité ayant accès au second registre distribué est en mesure d'effectuer des vérifications sur la relation entre des utilisateurs dont les identités ont été enregistrées dans les registres sans avoir accès auxdites identités enregistrées.
